# FASCICULE DE BREVET EUROPEEN

(11) **EP 0 817 530 B1**
(45) Date de publication et mention de la délivrance du brevet: **16.03.2005**
(21) Numéro de dépôt: 97401470.6
(22) Date de dépôt: 24.06.1997
(51) Int. Cl.: H05B 6/12, H05B 6/36

(54) **Optimisation d'inducteurs de cuisson par induction**
Optimierung der Induktoren einer Induktionskochstelle
Optimization of the inductors of an induction cooktop

(30) Priorité: 28.06.1996 FR 9608082
(43) Date de publication de la demande: 07.01.1998
(73) Titulaire: Brandt Industries, 92500 Rueil Malmaison (FR)
(72) Inventeur: Burais, Noel, 94117 Arcueil Cedex (FR); Caspard, Jean-Yves, 94117 Arcueil Cedex (FR)
(74) Mandataire: Santarelli

(56) Documents cités:
- EP-A- 0 442 219
- FR-A- 2 417 913
- FR-A- 2 441 988
- FR-A- 2 483 727
- GB-A- 2 048 025
- US-A- 4 296 295
- US-A- 4 770 355

## Description

La présente invention se rapporte à des inducteurs de cuisson par induction optimisés.

. Les inducteurs classiques de chauffage culinaire par induction sont constitués d'un fil multi-brins en cuivre enroulé en spirale en forme de galette (« pancake » en anglais). Un tel inducteur crée des courants de Foucault dans le fond du récipient métallique placé au-dessus de lui. La répartition de ces courants électriques dans le récipient n'est pas uniforme. Elle présente généralement un maximum à mi-rayon, et décroît assez fortement et régulièrement vers le centre et vers le bord. Cette répartition non uniforme des courants de Foucault dans le récipient provoque une répartition également non uniforme de la température dans le récipient, ce qui peut être préjudiciable à la cuisson de certains aliments.

On connaît ainsi un inducteur tel que décrit dans le document US 4 296 295, qui comporte des sections de spires disposées selon des pas différents d'une section à l'autre.

On connaît également un inducteur tel que décrit dans le document US 4 770 355, qui comporte des sections de spires de pas régulier, le nombre de spires dans chaque section étant identique.

La présente invention a pour objet un inducteur optimisé de telle façon qu'il crée dans un récipient placé au-dessus de lui des courants de Foucault dont la répartition soit la plus uniforme possible sur toute l'étendue du fond du récipient, qui soit facile à réaliser et d'un prix de revient sensiblement égal à celui des inducteurs classiques.

L'inducteur conforme à l'invention est tel que décrit à la revendication 1.

Selon un mode de réalisation de l'invention, les distances entre sections successives sont sensiblement égales à deux fois ledit pas régulier. De façon avantageuse, les transitions d'une section à la suivante se situent toutes dans un même secteur circulaire, dont l'angle au centre est d'environ 45°.

La présente invention sera mieux comprise à la lecture de la description détaillée d'un mode de réalisation, pris à titre d'exemple non limitatif et illustré par les dessins annexés, sur lesquels :
- la figure 1 est un diagramme montrant la répartition radiale de la densité des courants de Foucault dans le fond d'un récipient placé sur un inducteur classique, et la répartition recherchée par la présente invention,
- la figure 2 est une vue partielle en plan d'un inducteur conforme à l'invention, et
- la figure 3 est une vue partielle en coupe de l'inducteur de la figure 2.

L'invention est décrite ci-dessous en référence à un inducteur de cuisson d'un diamètre extérieur d'environ 220 mm, mais il est bien entendu qu'elle peut être mise en oeuvre pour des inducteurs de diamètres différents et pour des inducteurs autres que ceux de cuisson.

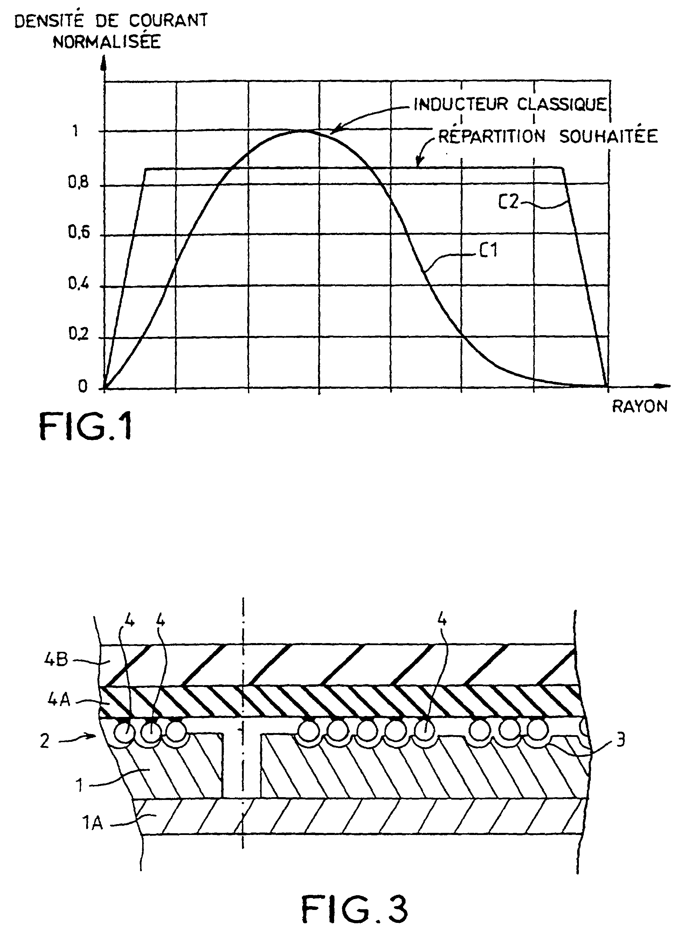

Selon le diagramme de la figure 1, on a représenté, pour un inducteur ayant un diamètre d'environ 220 mm, les courbes de répartition radiale de la densité des courants de Foucault dans le fond d'un récipient métallique pour deux cas. Le premier cas (courbe C1) se rapporte à un inducteur classique. Cette courbe C1 est une courbe en « cloche » présentant un maximum situé légèrement en-deçà du milieu du rayon de l'inducteur (à partir de son centre), et présentant une valeur nulle à ses deux extrémités.

Le deuxième cas (courbe C2) est la répartition souhaitée de ces mêmes courants de Foucault. Cette courbe doit être sensiblement rectiligne sur presque toute sa longueur, sauf à ses deux extrémités, où elle rejoint très rapidement une valeur nulle. On remarquera que l'amplitude (correspondant à une densité de courant normalisée) de la partie rectiligne de C2 est légèrement inférieure au maximum de C1.

Bien entendu, la courbe C2 est une courbe idéale, et en réalité la courbe obtenue avec l'inducteur de l'invention a une partie centrale à peu près rectiligne, moins étendue que celle de C2.

Le support 1 de l'inducteur 2 de l'invention est avantageusement réalisé de la façon décrite dans la demande de brevet français 94 13653. Comme illustré en figure 3, ce support 1 est une plaque en forme de galette cylindrique en résine thermo-conductrice. Sur la face supérieure de cette galette est formée par moulage une gorge 3 spiralée. Dans cette gorge 3, on dépose le conducteur 4, qui est par exemple un toron de plusieurs brins de matériau électriquement conducteur approprié. Le support 1 est fixé sur un plateau 1A en matériau amagnétique. Sur le bobinage formé par le conducteur 4, on dispose une couche 4A de matériau isolant thermique protégeant l'inducteur du récipient placé au-dessus de lui, sur une plaque 4B en vitrocéramique.

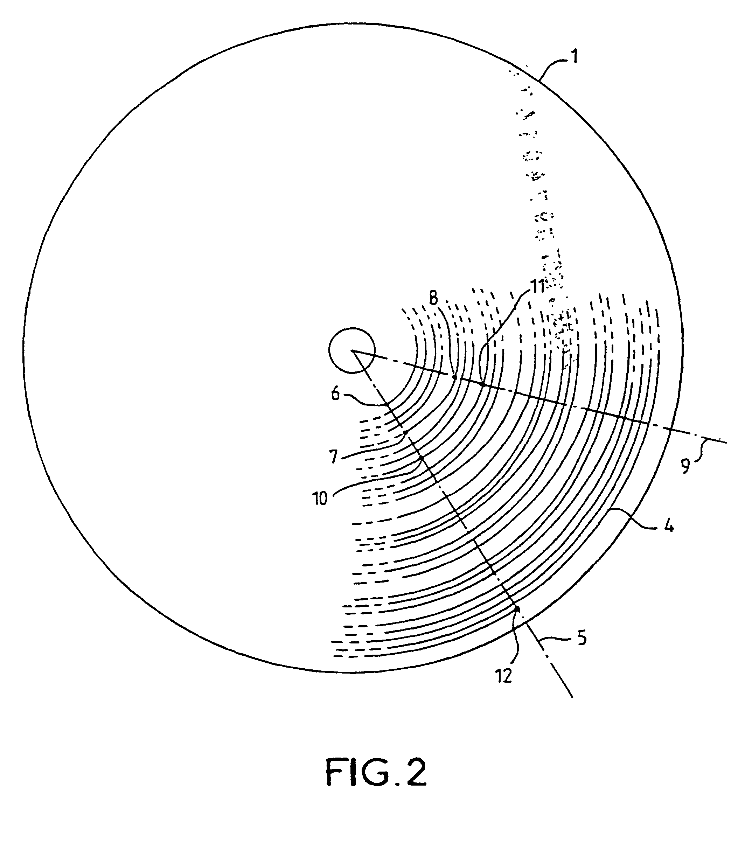

Comme représenté en figure 2, le conducteur 4 n'est pas disposé de façon classique (en spirale à pas régulier), mais en spirale à pas non régulier. Dans le cas présent, le conducteur 4 est disposé de la façon suivante. Le centre de la galette étant pris comme origine, on se déplace sur un rayon 5 de cette galette en passant par le début 6 du conducteur 4 (côté centre). Ce début 6 est à environ 21 mm du centre. A partir de ce début 6, le conducteur 4 suit, sur quatre tours, une première section de spirale à pas régulier P de 2,6 mm, le conducteur 4 étant déposé dans une gorge de largeur 1,9 mm et de profondeur 2,6 mm. Le quatrième tour se termine sur le rayon 5, en un point 7. Du point 7 à un point 8, situé au croisement d'un rayon 9 se trouvant à environ 45° du rayon 5 (dans le sens de progression de la spirale depuis le début 6), le conducteur 4 "saute un pas", c'est-à-dire que dans cette zone de transition qui est un secteur circulaire de 45°, comprise entre les rayons 5 et 9, le rayon de la spirale formée par le conducteur 4 augmente rapidement et progressivement de deux fois la valeur du pas P.

A partir du point 8, et sur une deuxième section de spirale de trois tours complets moins 45°, le conducteur 4 suit à nouveau une spirale à pas régulier égal à P, jusqu'à un point 10 situé sur le rayon 5. Du point 10 jusqu'à un point 11, situé sur le rayon 9, le rayon de la spirale formée par le conducteur 4 augmente à nouveau de deux fois P.

D'autres sections de spirale à pas régulier P sont formées de la même façon après cette deuxième section, les sections successives commençant sur le rayon 9 et s'achevant sur le rayon 5, et étant reliées les unes aux autres par une transition, entre les rayons 5 et 9, au long de laquelle le rayon de la spirale augmente de 2P. Ces sections, à partir de la troisième, ont respectivement les nombres de tours suivants (nombre de tours complets moins 45°) : 3, 1, 3, 3, 3 et 5. On obtient ainsi au total 8 sections, la dernière s'arrêtant en un point 12 situé sur le rayon 5 à environ 105 mm du centre de la galette. Du point 6 au point 12, la bobine spirale ainsi formée par le conducteur 4 s'étend sur 25 tours complets à pas variant de façon irrégulière.

. Cette conformation du conducteur 4 résulte du procédé suivant. On se fixe un objectif se composant de deux conditions principales et deux secondaires. Tout d'abord, la bobine du conducteur 4 doit présenter une impédance de valeur déterminée, qui est, dans le cas présent, la même que celle d'une bobine classique, afin de ne pas la désadapter par rapport à son dispositif d'alimentation de puissance haute fréquence (qui est du type à résonance et que l'on ne désire pas modifier), la deuxième condition principale étant que la répartition thermique dans la charge (le récipient métallique de cuisson) doit être la plus uniforme possible. Etant donné que plusieurs configurations différente de bobine peuvent répondre à ces deux premières conditions, on se fixe deux autres conditions, afin de faire un tri parmi les solutions ainsi retenues. Ces deux autres conditions sont que le champ de fuite de l'inducteur doit être le plus faible possible et que la résistance ramenée dans le circuit inducteur par la plus petite casserole utilisable avec l'inducteur doit être la plus élevée possible.

On se fixe au départ le diamètre extérieur du bobinage plat et le diamètre du conducteur constituant ce bobinage. On introduit ces donnés dans un calculateur mettant en oeuvre un algorithme génétique, connu en soi, qui effectue les opérations suivantes :
- choix aléatoire de plusieurs configurations de pas de la spire irrégulière formée par le conducteur,
- détermination de l'impédance de l'inducteur et de la répartition de densité de courant dans la charge, pour chacune de ces configurations par résolution des équations de Maxwell (par la méthode des éléments finis, par exemple).
- évaluation de chacune de ces configurations par rapport aux résultats des évaluations des configurations évaluées avant elle.

Bien entendu, pour la première configuration évaluée, il ne peut y avoir d'évaluation par rapport à une précédente, mais évaluation par rapport aux valeurs minimales que l'on se fixe au départ. Dès qu'une configuration est considéré comme bonne, on la retient.
- rejet d'une configuration évaluée si le résultat de l'évaluation est moins bon que ceux des configurations précédentes
- traitement des configurations retenues après évaluation, consistant à les combiner deux à deux, les couples de combinaisons étant choisis aléatoirement, en vue d'essayer d'obtenir une nouvelle configuration qui est un produit de "croisement" du couple et dont le résultat d'évaluation peut être meilleur que celui de chacun des membres du couple.
- détermination de la répartition de densité de courant dans la charge pour chacune des nouvelles configurations correspondant à ces produits de croisements et évaluation de ces nouvelles configurations comme précédemment,
- rejet des nouvelles configurations si le résultat de l'évaluation est moins bon que celui des anciennes configurations et des nouvelles venant d'être examinées,
- combinaison des nouvelles configurations retenues par couples, croisements dans chaque couple, et ainsi de suite jusqu'à obtenir au moins une configuration optimale.

Dans le processus exposé ci-dessus, la détermination de l'impédance de l'inducteur et de la répartition de courant dans la charge sont effectuées de façon connue en soi pour l'homme du métier, et ne sera donc pas expliquée plus en détail.

L'évaluation de chacune des configurations examinées se fait en comparant sa répartition de densité de courant dans la charge et son impédance aux valeurs correspondantes des configurations précédemment examinées. Si leurs valeurs sont proches, on fait appel à deux autres critères discriminants, à savoir, comme précisé ci-dessus, le champ de fuite de l'inducteur et la résistance ramenée par la plus petite charge utilisable. Si l'évaluation ainsi effectuée de la configuration examinée est jugée meilleure ou sensiblement égale à celle des configurations déjà examinées, on retient la configuration en question, sinon on la rejette.

Le "croisement" entre deux configurations prises au hasard parmi toutes celles retenues consiste essentiellement à combiner (au sens mathématique du terme) leurs caractéristiques (nombre de tours total et nombre de tours des différentes sections). Une telle combinaison peut, par exemple, consister à créer une nouvelle configuration dont la structure (nombres de tours, total et de chaque section, et pas des spires) soit égale à la moyenne des structures des "parents".

Bien entendu, d'autres types de combinaisons peuvent être mis en oeuvre.

Les autres éléments du foyer de cuisson incorporant l'inducteur de l'invention peuvent être ceux des foyers classiques (plaque de vitrocéramique supportant les casseroles, supports, matériau de focalisation du champ magnétique de l'inducteur, ...), et ne sont donc pas décrits ici.

## Revendications

1. Inducteur pour foyer de cuisson à induction, de type galette, comportant un conducteur (4) déposé dans une gorge (3) moulée dans une plaque (1) de résine conductrice de la chaleur, ce conducteur étant enroulé en spirale plane, et la spirale comportant, le long d'un rayon, des sections de spirale à pas régulier à l'intérieur de chaque section, **caractérisé en ce que** ledit pas régulier est identique d'une section à l'autre et **en ce que** la plupart des sections comportent plusieurs tours, le nombre de tours des sections successives variant de façon irrégulière.

2. Inducteur selon la revendication 1, **caractérisé en que** les distances entre sections successives sont sensiblement égales à deux fois ledit pas régulier.

3. Inducteur selon la revendication 2, **caractérisé en ce que** les transitions d'une section à la suivante se situent toutes dans un même secteur circulaire, dont l'angle au centre est d'environ 45°.

4. Inducteur selon l'une des revendications 1 à 3, ayant un diamètre extérieur d'environ 220 mm, **caractérisé en ce que** le nombre de tours des différentes sections successives est, depuis le centre vers la périphérie, respectivement de : 4, 3, 3, 1, 3, 3, 3, 5.

5. Inducteur selon l'une des revendications 1 à 4, **caractérisé en ce que** le pas régulier à intérieur de chaque section est égal à 2,6 mm.

## Patentansprüche

1. Induktor für eine Induktionskochstelle nach Art einer Scheibe, mit einem Leiter (4), der in eine in einer Platte (1) aus wärmeleitendem Harz geformte Rille (3) eingelegt ist, wobei dieser Leiter in Form einer flachen Spirale gewunden ist und die Spirale entlang einem Radius spiralförmige Abschnitte aufweist, die innerhalb jedes Abschnitts gleichmäßig beabstandet sind, **dadurch gekennzeichnet, daß** der gleichmäßige Abstand von einem Abschnitt zum anderen gleich ist und daß die meisten Abschnitte mehrere Windungen aufweisen, wobei sich die Anzahl der Windungen der aufeinanderfolgenden Abschnitte ungleichmäßig ändert.

2. Induktor gemäß Anspruch 1, **dadurch gekennzeichnet, daß** die Zwischenräume zwischen aufeinanderfolgenden Abschnitten im wesentlichen das Zweifache des gleichmäßigen Abstands betragen.

3. Induktor gemäß Anspruch 2, **dadurch gekennzeichnet, daß** sich die Übergänge von einem Abschnitt zum folgenden alle in demselben Kreisausschnitt befinden, dessen Mittelpunktswinkel etwa 45° beträgt.

4. Induktor gemäß einem der Ansprüche 1 bis 3, mit einem Außendurchmesser von etwa 220 mm, **dadurch gekennzeichnet, daß** die Anzahl der Windungen der verschiedenen aufeinanderfolgenden Abschnitte von der Mitte aus zum Umfang hin 4, 3, 3, 1, 3, 3, 3 bzw. 5 beträgt.

5. Induktor gemäß einem der Ansprüche 1 bis 4, **dadurch gekennzeichnet, daß** der gleichmäßige Abstand innerhalb jedes Abschnitts 2,6 mm beträgt.

## Claims

1. An inductor for an inductive cooking appliance, being of the pancake type comprising a conductor (4) laid in a groove (3) which is moulded in a plate (1) of thermally conductive resin, the said conductor being rolled in a flat spiral, and the spiral including, along a radius, spiral sections of regular pitch within each section, **characterised in that** the said regular pitch is identical from one section to the other, and **in that** most of the sections comprise a plurality of turns, the number of turns in successive sections varying in an irregular manner.

2. An inductor according to Claim 1, **characterised in that** the distances between successive sections are substantially equal to twice the said regular pitch.

3. An inductor according to Claim 2, **characterised in that** the transitions from one section to the next are all situated in the same circular section, which subtends at the centre an angle of about 45°.

4. An inductor according to one of Claims 1 to 3, having an outer diameter of about 220 mm, **characterised in that** the number of turns in the different successive sections is, going from the centre towards the periphery, and respectively: 4, 3, 3, 1, 3, 3, 3, 5.

5. An inductor according to one of Claims 1 to 4, **characterised in that** the regular pitch within each section is equal to 2.6 mm.
